# FASCICULE DE BREVET EUROPEEN

(11) **EP 1 185 168 B1**
(45) Date de publication et mention de la délivrance du brevet: **26.05.2004**
(21) Numéro de dépôt: 00920817.4
(22) Date de dépôt: 17.04.2000
(51) Int. Cl.: A01K 63/04

(54) **PROCEDE ET INSTALLATION POUR AMELIORER LES CONDITIONS D'ELEVAGE DE POISSONS EN CIRCUIT FERME**
VERFAHREN ZUR VERBESSERUNG VON FISCHZUCHTBEDINGUNGEN IM GESCHLOSSENEN KREISLAUF UND EINRICHTUNG DAFÜR
METHOD FOR IMPROVING CONDITIONS IN CLOSED CIRCUIT FISH FARMING AND INSTALLATION THEREFORE

(30) Priorité: 25.05.1999 FR 9906567
(43) Date de publication de la demande: 13.03.2002
(73) Titulaire: L'AIR LIQUIDE, Société Anonyme à Directoire et Conseil de Surveillance pour l'Etude et l'Exploitation des, 75321 Paris Cédex 07 (FR)
(72) Inventeur: CRISINEL, Pascal, F-78280 Guyancourt (FR); PROST, Lucie, F-75006 Paris (FR); BON, Lionel, F-85330 Noirmoutier (FR)
(74) Mandataire: Mellul-Bendelac, Sylvie Lisette
(86) Numéro de dépôt international: PCT/FR2000/000993
(87) Numéro de publication internationale: WO 2000/070943

(56) Documents cités:
- WO-A-89/05578
- DE-A- 3 031 492
- DE-A- 3 827 716
- PATENT ABSTRACTS OF JAPAN vol. 15, no. 429 (C-0880), 31 octobre 1991 (1991-10-31) & JP 03 180132 A (MITSUBISHI ELECTRIC CORP.)
- DATABASE WPI Week 1979 Derwent Publications Ltd., London, GB; AN 1979-00823b XP002127475 & JP 53 132495 A (KAWASAKI STEEL CORP.), 18 novembre 1978 (1978-11-18)

## Description

La présente invention concerne le domaine de l'aquaculture, en particulier mais non exclusivement en eau de mer, secteur industriel en plein développement, notamment pour la production de bars, daurades, et turbots.

Elle s'adresse en particulier aux piscicultures en circuit fermé.

En considérant ici le cas des élevages de poissons en eau de mer, on sait en effet que les fermes d'élevage de poissons d'eau de mer fonctionnant en circuit ouvert rejettent de très grandes quantités d'eau polluée. On évalue typiquement les quantités d'eau nécessaires et rejetées à environ 200 à 300 m³ d'eau/kg de poissons produits. On conçoit alors qu'en fonction du site d'implantation de telles fermes d'élevage, des contraintes environnementales croissantes tentent maintenant d'imposer un traitement des eaux de rejet, voire carrément une limitation du taux d'eau rejetée.

Une telle technique d'élevage de poissons d'eau de mer en circuit fermé (donc où l'on recycle au moins une partie de l'eau de mer du ou des bassins d'élevage pour l'épurer et la réinjecter dans le bassin considéré), est incontestablement une technique émergente et en plein développement, même si sa maîtrise se révèle en pratique très délicate et pointue car elle nécessite des traitements spécifiques pour contrôler le pH, la teneur en oxygène, la teneur en CO₂, la charge microbienne, particulaire, la charge azotée (notamment l'ammoniaque), les polluants dissous, ou encore la couleur des eaux des bassins.

Reste qu'en fonction des pisciculteurs, la maîtrise de cette technique d'élevage en circuit fermé peut permettre de recycler selon les cas de 10 à 95 voire 98 % de l'eau de mer, le complément étant assuré par un apport d'eau de mer neuve.

Néanmoins, il apparaît en pratique, que si des circuits, d'ailleurs assez complexes, de traitement d'eau en circuit fermé permettent de contrôler effectivement des paramètres tels que le pH, les gaz dissous, ou encore la charge microbienne de l'eau recyclée (utilisation de filtres mécaniques, de filtres biologiques, de colonnes de dégazage...), d'autres problèmes ne sont toujours pas véritablement résolus. Parmi ces problèmes techniques, qui constituent de véritables épines dans la vie de ces installations d'aquaculture, on trouve un problème de la coloration de l'eau.

On observe en effet, tout particulièrement dans les taux de recirculation élevés (au-delà de 80 %), l'apparition d'une coloration jaune de l'eau, qui limite la visibilité et entraîne incontestablement un stress chez les espèces élevées.

Certes la nature de ces substances n'a pas véritablement été identifiée jusque là, mais certains travaux penchent pour l'intervention d'acides humiques dans ce phénomène. On constate alors qu'aucune technologie n'a véritablement été validée dans la littérature à l'heure actuelle pour résoudre ce problème, problème qui est le plus souvent qualifié « d'eaux jaunes », les UV n'ayant notamment aucune action sur ce phénomène de couleur.

Les documents JP-03 180 132 et DE-A-3 827 716 illustrent l'état antérieur de la technique de ce domaine, où un ozoneur est prévu dans le circuit de recirculation de l'eau.

Un des objectifs de la présente invention est alors notamment de proposer un procédé permettant d'améliorer les conditions d'élevage de poissons en circuit fermé, qu'il s'agisse de poissons d'eau de mer ou d'eau douce ou autres produits de la mer, visant notamment à démontrer sur le phénomène précédemment décrit un effet curatif (pour éliminer substantiellement les substances qui se seraient déjà accumulées), et préventif (afin de limiter substantiellement l'apparition de ces substances colorantes), tout en maintenant bien évidemment des conditions acceptables pour les espèces élevées en termes de toxicité et de microbiologie.

Pour alléger la terminologie, on utilisera dans ce qui suit le terme « poisson », tout en sachant qu'il recouvre selon l'invention (sauf précision additionnelle) les poissons, oeufs, alevins d'eau de mer ou d'eau douce, ou encore des produits de la mer tels crustacés et mollusques.

L'invention concerne alors un procédé d'amélioration des conditions d'élevage de poissons en circuit fermé, selon la revendication 1 ci-après.

Le procédé d'amélioration des conditions d'élevage selon l'invention pourra également adopter l'une ou plusieurs des caractéristiques revendiquées aux revendications 2 à 7 ci-après.

L'invention concerne également une installation d'élevage de poissons en circuit fermé, selon la revendication 8 ci-après.

D'autres caractéristiques et avantages de l'invention ressortiront de la description suivante, donnée uniquement à titre illustratif et nullement limitatif, et faite en référence aux dessins annexés sur lesquels :
- la figure 1 est une représentation schématique d'un exemple d'installation d'élevage de poissons d'eau de mer en circuit fermé ;
- la figure 2 est une représentation schématique d'un autre exemple typique d'installation d'élevage de poissons d'eau de mer en circuit fermé. utilisé pour la mise en oeuvre d'exemples de réalisation selon l'invention tels que détaillée plus loin dans la présente demande ;
- la figure 3 est une représentation schématique partielle d'un exemple de système permettant par exemple l'ozonation de l'eau recirculée dans la boucle ;
- la figure 4 est une représentation partielle d'un exemple de système permettant l'ozonation de l'apport d'eau neuve ;
- la figure 5 est une illustration schématique du cas d'un seul ozoneur utilisé pour ozoner a la fois l'eau recirculée et l'apport d'eau neuve.

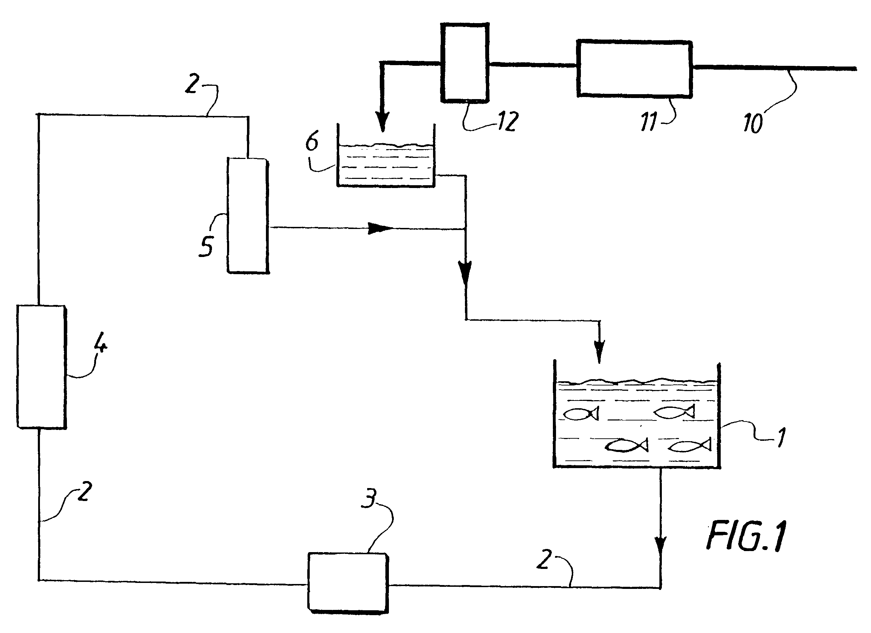

On a illustré sur la figure 1 la présence d'un bassin (1) d'élevage de poissons, ici de poissons d'eau de mer d'un bassin ou bien sûr un des bassins d'élevage du site considéré), dont on recycle au moins une partie de l'eau de mer, par la ligne de recirculation 2

L'eau de mer ainsi recirculée subit sur son parcours un certain nombre d'étapes d'épuration carm lesquelles on peut trouver un passage sur un filtre mécanique 3, un passage cans un filtre biologique 4 (nitrifiant puis dénitrifiant), ainsi qu'une colonne du degazage (5) permettant notamment d'éliminer le dioxyde de carbone ou encore l'azote dissout.

Par ailleurs, on note en haut de la figure un apport d'eau neuve (via la ligne 10 représentée sur la figure en trait epais), qui passe par exemple, avant d'atteindre un bac de retention 6, par une étape de filtration mécanique 11, ainsi que par un échangeur termique 12 pour amener le cas échéant l'apport d'eau neuve à temperature optimale de croissance des poissons.

L'eau recirculée en provenance de la colonne 5 est mélangée avec de l'eau neuve venant du bac de retention 6, pour retourner ensuite vers le bassin 1.

Un tel circuit ferme peut typiquement permettre de recycler 10 à 95% voire 98 % de l'eau de mer des bassins considérés.

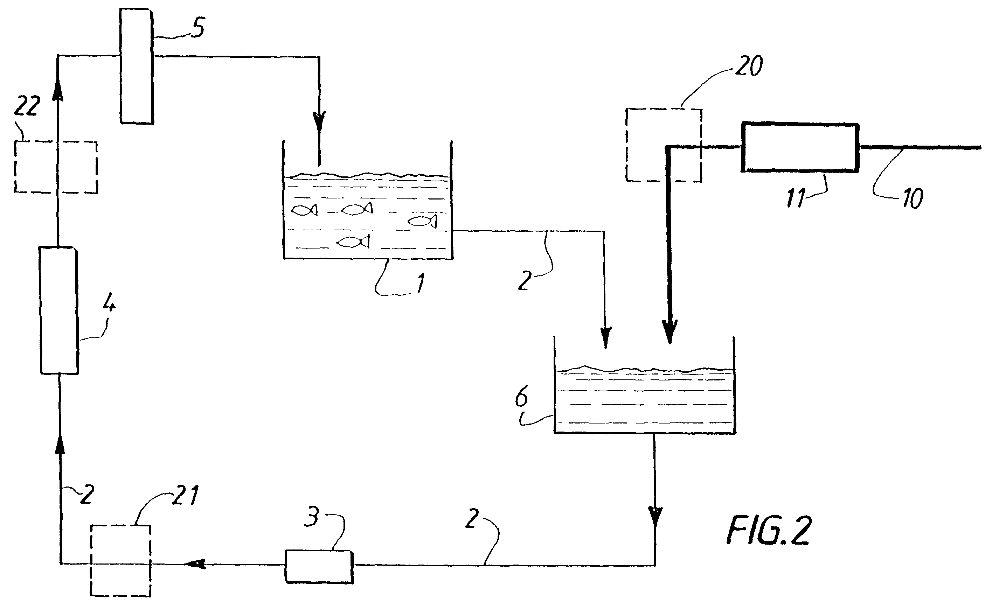

On reconnaît sur la figure 2 une variante d'installation d'élevage de poissons en circuit fermé, ici également utilisée en eau de mer, où l'on reconnaît la présence d'un bassin d'élevage 1, duquel on recycle au moins une partie de l'eau de mer vers un bac de retention 6, également alimenté par ailleurs par un apport d'eau de mer neuve (ligne 10 représentée ici encore en trait épais).

C'est alors ici, dans le cadre de la présente variante, le mélange d'eau de mer issu du bac de rétention 6 qui subit différentes étapes d'épuration parmi lesquelles la filtration mécanique 3, la filtration biologique 4, ou encore la colonne de dégazage 5, avant d'être utilisé dans le bassin 1.

On a représenté sur les lignes, par des rectangles dessinés en lignes discontinus, des exemples de localisation d'injection de gaz ozoné selon l'invention (20,21,22), respectivement sur la ligne d'apport d'eau neuve en aval du système de filtration mécanique, sur la ligne de recyclage en provenance du bac de rétention 6 en amont et en aval du filtre biologique 4.

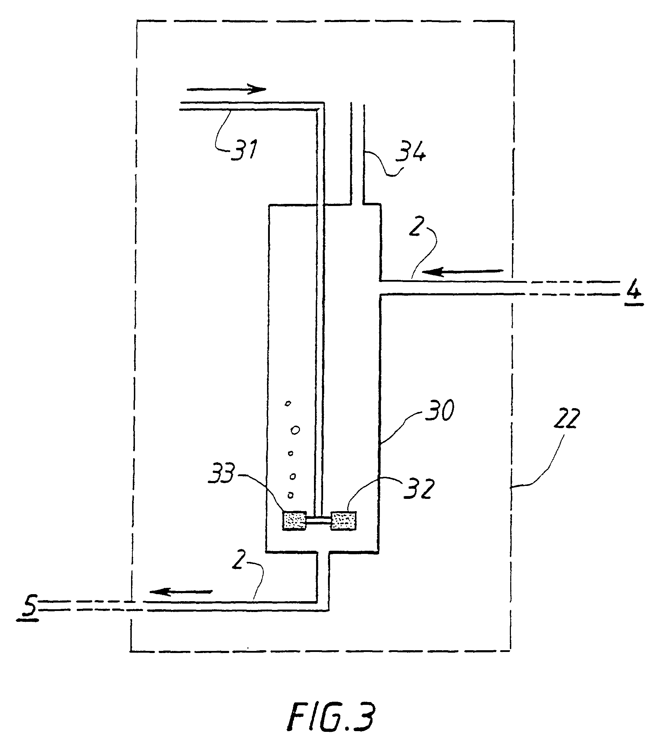

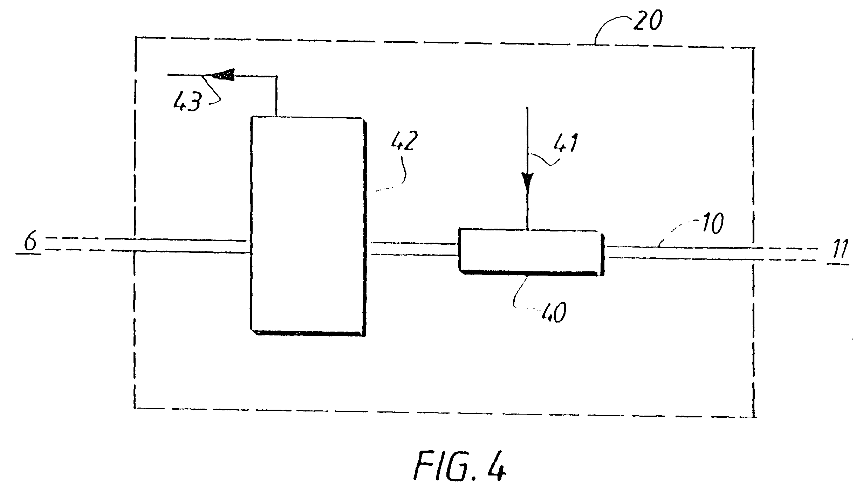

On trouve précisément en figures 3 et 4 deux exemples de modes de réalisation de l'injection de gaz ozoné dans l'eau de la boucle et dans l'apport d'eau neuve.

Ainsi on retrouve en figure 3 un mode possible de réalisation de l'injection de gaz ozoné au niveau de la localisation 22, en aval du filtre biologique 4, ozonation de l'eau du circuit fermé en provenance du bac de rétention 6. Bien que dans ce qui suit le mode de la figure 3 soit préféré pour l'ozonation de l'eau recirculée et celui de la figure 4 pour celle de l'eau neuve, on conçoit que ceci est techniquement tout à fait interchangeable, et que donc par exemple le système de la figure 3 puisse être utilisé également pour ozoner l'eau neuve.

On reconnaît alors sur la figure 3 l'arrivée d'eau recirculée en provenance du filtre biologique 4, débouchant dans la partie haute d'une colonne d'ozonation 30 dans le bas de laquelle se trouve un système d'injection de gaz ozoné dans l'eau de la colonne (ici deux systèmes de poreux 32 et 33), système d'injection relié à une canalisation 31 d'arrivée de gaz ozoné.

Une canalisation 34 de mise l'air est présente dans le haut de la colonne 30, alors qu'une canalisation d'évacuation de l'eau ozonée est prévue dans le bas de la colonne afin de diriger l'eau ainsi ozonée vers l'étape suivante qui se trouve être, pour le mode de réalisation représenté, la colonne de dégazage 5.

On conçoit alors qu'un tel arrangement permettant un contre courant des bulles de gaz ozoné et de l'arrivée d'eau en provenance du circuit fermé permette dans des conditions simples et économiques l'ozonation d'un débit d'eau, structure que l'on privilégiera tout particulièrement dans les cas de taux d'ozonation relativement faibles, préférentiellement en dessous de 1 ppm.

On a donné en figure 4 un autre exemple de mode de réalisation d'ozonation d'un débit d'eau, convenant typiquement pour le point d'ozonation 20 de la figure 2 (ozonation de l'apport d'eau neuve), et l'on retrouve sur la figure la canalisation 10 d'arrivée de l'apport d'eau neuve, en provenance du système de filtration 11, flux d'eau neuve qui rencontre au niveau d'un mélangeur 40 (par ex. : serpentin, mélangeur statique, tour de contact, hydro-injecteur type venturi...), une arrivée 41 de gaz comportant de l'ozone en provenance d'un ozoneur.

Le flux d'eau neuve ainsi ozoné est alors dirigé vers une capacité de stockage 42 assurant un temps de contact adéquat, et équipée comme de façon conventionnelle d'un système d'évacuation de gaz 43 (évacuation vers un système conventionnel de récupération, detoxification....).

On peut alors bien entendu selon ce mode de réalisation prélever de la capacité 42 de l'eau ainsi ozonée pour la diriger en l'occurrence vers le bac de rétention 6, où elle sera mélangée avec l'eau recirculée en provenance du bassin 1.

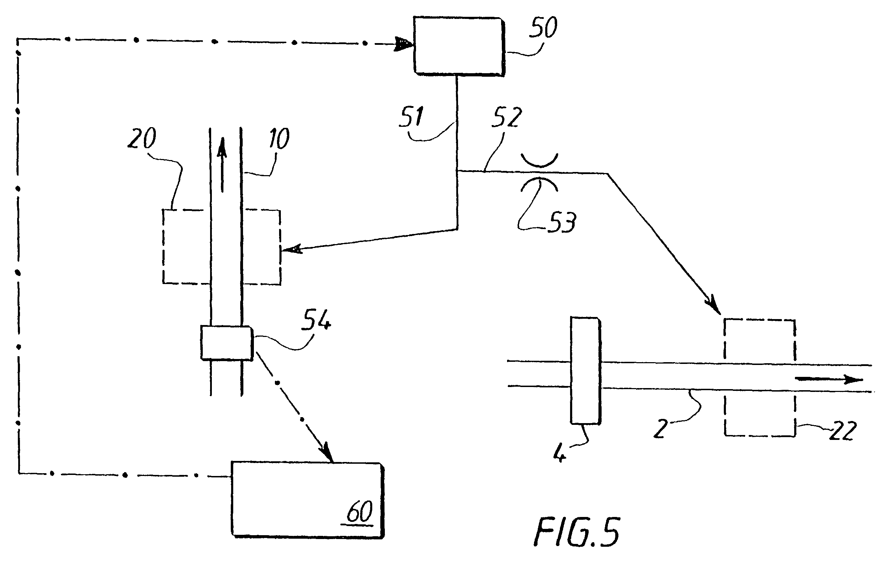

Quant à la figure 5, elle illustre un mode de réalisation très avantageux de l'invention, où l'on ozone à la fois l'apport d'eau neuve et l'eau recirculée dans le circuit fermé, ceci à l'aide d'un seul ozoneur (référence 50 sur la figure), l'ozoneur fonctionnant selon les modalités suivantes :
- on retrouve sur la figure 5 la canalisation 10 d'apport d'eau neuve et son point 20 d'injection de gaz ozoné, la canalisation 10 étant sur cette vue détaillée équipée d'un système 54 mesureur de débit d'eau ;
- on reconnaît également la canalisation 2 de recirculation d'eau en provenance du bac de rétention 6, ici détaillée au niveau du point d'injection 22 de gaz ozoné ;
- afin d'ozoner dans des conditions satisfaisantes les deux localisations précitées du circuit, l'unique ozoneur 50 fournit alors (canalisation 51), un débit principal de gaz ozoné, dont on dérive une portion déterminée du débit (branchement de canalisation 52) via un orifice calibré 53 pour diriger ce gaz ozoné vers la localisation 22 (circuit fermé). Le reste du débit principal de gaz ozoné (ligne 51) est dirigé vers le point d'ozonation 20 (eau neuve) ;
- une unité d'acquisition et de traitement de données tel un automate programmable 60 reçoit alors du débitmètre 54 une information de débit d'eau neuve à traiter dans la canalisation 10, et rétroagit alors en fonction de cette information pour réguler la puissance de l'ozoneur 50 en fonction des variations de débit d'eau dans la canalisation 10 (on sait que ce débit d'eau neuve peut notamment varier dans une certaine gamme en fonction d'opérations d'entretien des filtres et autres pompes en amont) ;
- on voit alors que l'unité 60 va. selon les variations de débit d'eau neuve sur la canalisation 10, faire varier la puissance de l'ozoneur 50, alors que le débit de gaz ozoné dans la canalisation 51 est lui substantiellement constant, ce qui va donc faire varier la teneur en ozone dans ce débit principal de gaz ozoné ;
- le choix alors selon ce mode de réalisation de placer sur la dérivation 52 un orifice calibré (53) va donner lieu à la dérivation d'un débit de gaz ozoné constant vers le point 22, mais dont la teneur en ozone va également varier dans une gamme déterminée ;
- on voit dès lors que par un choix approprié de la régulation de puissance de l'ozoneur et de l'orifice calibré (53), on pourra délivrer tant à la localisation 20 qu'à la localisation 22 un gaz ozoné dans une gamme de teneur requise par le site utilisateur.

Un tel arrangement (un seul ozoneur, orifice calibré,...), représente donc une structure légère, très économique, mais fournissant les performances requises aux différents points du circuit, tel que par exemple une teneur entre 2 et 10 mg d'ozone/litre d'eau neuve au niveau du point 20, et entre 0,1 et 0,5 mg d'ozone/litre d'eau recirculée au niveau du point 22.

Une installation telle que celle représentée dans le cadre des figures 2 et 5 a été utilisée pour des exemples de mise en oeuvre de l'invention, dans les conditions opératoires suivantes :
- on considère un bassin (1) d'élevage de poissons en eau de mer, fonctionnant avec 30 à 100 m³ d'apport d'eau neuve, et une recirculation d'environ 1000 m³/h de l'eau du bassin 1;
- on utilise une installation d'ozonation à l'aide d'un seul ozoneur telle celle représentée dans le cadre de la figure 5, pour mettre en place les teneurs suivantes en ozone : de l'ordre de 3 ppm d'ozone dans l'eau neuve et une teneur voisine de 0,1 ppm dans l'eau du circuit au niveau du point 22, c'est à dire en aval du filtre biologique 4 ;
- comme signalé précédemment l'ozoneur va alors voir varier sa puissance dans une gamme de l'ordre de 1,8 à 3,2 g d'ozone par m³, alors que la teneur en ozone dans la ligne 52 va varier typiquement entre 0,07 et 0,13 ppm ;
- on évalue alors l'impact un tel traitement sur la qualité des eaux le long du circuit : d'une part, quant au taux de bactéries par ml d'eau, d'autre part, quant à l'absorbance de l'eau à 400 nanomètres (du fait du phénomène d'eaux jaunes évoqué précédemment) ;
- il est bien entendu que tous ces résultats sont suivis par rapport à un bassin témoin fonctionnant de façon normale en circuit fermé mais sans aucune arrivée de gaz ozonés selon l'invention.

On peut alors résumer les résultats très spectaculaire obtenus par les données suivantes :
a) on constate d'une part, que l'on divise au moins par deux l'absorbance de l'eau par rapport au bassin témoin, ce que confirme parfaitement au jour le jour la perception visuelle de l'éleveur par rapport à la clarté de l'eau ;
b) on obtient un abattement du taux bactérien circulant de l'ordre d'un log;
c) l'éleveur constate une indéniable efficacité du traitement à l'ozone selon l'invention tant sur la décoloration des circuits fermés que sur la qualité de l'eau en général, conduisant de son point de vue même à une amélioration de la biomasse des poissons par rapport au bassin témoin, dans des proportions qui restent à déterminer sur des essais à plus long terme.

Tous ces résultats sont d'autant plus spectaculaires et satisfaisants que l'eau de mer est un milieu complexe, très réactif, que l'ozone oxyde de façon non sélective en formant des sous-produits d'oxydation que la littérature appelle « oxydant totaux résiduels », dont la nature n'est pas parfaitement élucidée mais qui sont on le sait toxiques pour les poissons quand leur présence est insuffisamment maîtrisée.

D'où l'importance fondamentale de maîtriser selon l'invention l'eau qui est ozonée, les points d'injection du gaz ozoné, les temps de latence et rétention, ainsi que les doses, afin de maîtriser également les oxydants totaux résiduels. On aura noté par exemple que les doses proposées pour l'apport d'eau neuve sont substantiellement élevées par rapport aux doses que l'homme du métier des élevages de poissons a couramment à l'esprit.

Quoique la présente invention est été décrite en relation avec des modes de réalisation particuliers, elle ne s'en trouve pas limitée pour autant, mais est au contraire susceptible de modifications et de variantes qui apparaîtront à l'homme de l'art dans le cadre des revendications ci-après.

Ainsi par exemple, si l'on a évoqué dans ce qui précède l'ozonation, selon un des aspects de l'invention, du débit d'eau neuve, on pourrait sans sortir à aucun moment du cadre de la présente invention ne procéder à l'ozonation que d'une partie du débit d'eau neuve qui parvient aux bassins.

## Revendications

1. Procédé d'amélioration des conditions d'élevage de poissons en circuit fermé, selon lequel :
a) on recycle au moins une partie de l'eau d'au moins un bassin (1) d'élevage, eau recyclée qui subit un ou plusieurs traitements d'épuration (3, 4, 5) avant d'être réinjectée dans le bassin considéré ;
b) sur le parcours de recyclage de l'étape a), l'eau recyclée est mélangée à un apport d'eau neuve (10);
c) on procède à une ozonation de tout ou partie de l'eau recyclée (21, 22), ainsi que de tout ou partie de l'apport d'eau neuve (20) avant son mélange avec l'eau recyclée, en disposant pour cela d'un seul ozoneur (50) fonctionnant selon l'une ou l'autre des modalités suivantes :
i) ledit ozoneur produit un débit principal (51) de gaz ozoné, et l'on dérive une portion déterminée (52) du débit principal de gaz ozoné au travers d'un orifice calibré (53), pour le diriger vers l'eau recirculée à ozoner, la puissance dudit ozoneur étant régulée sur la base du débit d'eau neuve à ozoner ;
j) ledit ozoneur produit un débit principal (51) de gaz ozoné et l'on dérive une portion déterminée (52) du débit principal de gaz ozoné au travers d'un orifice calibré (53), pour le diriger vers l'eau neuve à ozoner, la puissance dudit ozoneur étant régulée sur la base du débit d'eau recirculée à ozoner.

2. Procédé d'amélioration des conditions d'élevage selon la revendication 1, **caractérisé en ce que** l'eau neuve est ozonée par injection d'un gaz comportant de l'ozone, de façon à obtenir une teneur en ozone dans l'eau comprise entre 1 et 15 mg d'ozone/titre, et plus préférentiellement entre 2 et 10 mg d'ozone/litre d'eau.

3. Procédé d'amélioration des conditions d'élevage selon la revendication 1 ou 2, **caractérisé en ce que** l'eau recirculée qui est ozonée l'est par injection d'un gaz comportant de l'ozone, de façon à obtenir une teneur en ozone dans l'eau recirculée comprise entre 0,05 et 2 mg d'ozone/litre, et plus préférentiellement entre 0,1 et 0,5 mg d'ozone/litre d'eau.

4. Procédé d'amélioration des conditions d'élevage selon l'une des revendications précédentes, **caractérisé en ce que** le parcours de recyclage comporte un traitement d'épuration utilisant un filtre biologique (4), et l'injection du gaz ozoné est alors effectuée en amont (21) de ce filtre biologique.

5. Procédé d'amélioration des conditions d'élevage selon l'une des revendications 1 à 3, **caractérisé en ce que** le parcours de recyclage comporte un traitement d'épuration utilisant un filtre biologique (4), et l'injection du gaz ozoné est alors effectuée en aval (22) de ce filtre biologique, avant que l'eau recirculée ne soit mélangée avec l'apport d'eau neuve.

6. Procédé d'amélioration des conditions d'élevage selon l'une des revendications précédentes, **caractérisé en ce que** le mélange entre l'eau recyclée et l'apport d'eau neuve est effectué au niveau d'un bac de rétention (6b).

7. Procédé d'amélioration des conditions d'élevage selon l'une des revendications précédentes, **caractérisé en ce que** l'élevage de poissons ainsi amélioré est un élevage de poissons d'eau de mer en circuit fermé.

8. Installation d'élevage de poissons en circuit fermé, élevage qui comporte des moyens de recyclage d'au moins une partie de l'eau d'au moins un bassin d'élevage, et des moyens d'épuration de l'eau recirculée avant sa reutilisation dans le bassin considéré, ainsi que des moyens d'apport d'eau neuve au courant d'eau recyclée, **caractérisée en ce qu'**elle comporte des moyens d'ozonation de tout ou partie de l'eau recirculée ainsi que de tout ou partie de l'apport d'eau neuve avant son mélange avec l'eau recirculée, moyens d'ozonation qui comprennent un unique ozoneur (50) apte à fournir un débit principal (51) de gaz ozoné, selon l'une ou l'autre des configurations suivantes :
i) l'installation comprend une ligne de dérivation (52) d'une portion déterminée du débit principal de gaz ozoné produit par l'ozoneur, au travers d'un orifice calibré (53), pour le diriger vers l'eau recirculée à ozoner (22), des moyens de mesure (54) du débit d'eau neuve à ozoner, et des moyens de régulation (60) de la puissance dudit ozoneur sur la base du débit d'eau neuve mesuré par les dits moyens de mesure;
j) l'installation comprend une ligne de dérivation (52) d'une portion déterminée du débit principal de gaz ozoné produit par l'ozoneur, au travers d'un orifice calibré (53), pour le diriger vers l'eau neuve à ozoner (22), des moyens de mesure (54) du débit d'eau recirculée à ozoner, et des moyens de régulation (60) de la puissance dudit ozoneur sur la base du débit d'eau recirculée mesuré par les dits moyens de mesure.

9. Installation selon la revendication 8, **caractérisée en ce que** l'élevage de poissons ainsi traité est un élevage de poissons d'eau de mer en circuit fermé.

## Patentansprüche

1. Verfahren zur Verbesserung der Fischzuchtbedingungen im geschlossenen Kreislauf, nach welchem:
a) man mindestens einen Teil des Wassers mindestens eines Zuchtbeckens (1) zurückführt, wobei das zurückgeführte Wasser einer oder mehreren Klärbehandlungen (3, 4, 5) unterworfen wird, bevor es wieder in das betreffende Becken eingeleitet wird;
b) das zurückgeführte Wasser auf dem Rückführverlauf des Schritts a) mit einem Frischwasserzusatz (10) vermischt wird;
c) man einen Teil oder das ganze zurückgeführte Wasser (21, 22) sowie das ganze oder einen Teil des Frischwasserzusatzes (20) vor dem Mischen mit dem zurückgeführten Wasser ozonisiert, wobei man dafür über einen einzigen Ozonisator (50) verfügt, der entsprechend der einen oder anderen der folgenden Bedingungen funktioniert:
i) der Ozonisator erzeugt einen Hauptdurchfluss (51) ozonisierten Gases, und man zweigt einen bestimmten Anteil (52) des Hauptdurchflusses ozonisierten Gases durch eine kalibrierte Öffnung (53) ab, um ihn zu dem zu ozonisierenden zurückgeführten Wasser zu lenken, wobei die Leistung des Ozonisators auf der Grundlage des zu ozonisierenden Frischwasserdurchflusses geregelt wird;
j) der Ozonisator erzeugt einen Hauptdurchfluss (51) ozonisierten Gases, und man zweigt einen bestimmten Anteil (52) des Hauptdurchflusses ozonisierten Gases durch eine kalibrierte Öffnung (53) ab, um ihn zu dem zu ozonisierenden Frischwasser zu lenken, wobei die Leistung des Ozonisators auf der Grundlage des zu ozonisierenden zurückgeführten Wasserdurchflusses geregelt wird.

2. Verfahren zur Verbesserung der Zuchtbedingungen nach Anspruch 1, **dadurch gekennzeichnet, dass** das Frischwasser durch Einleiten eines Gases, das Ozon enthält, ozonisiert wird, so dass ein Ozongehalt im Wasser zwischen 1 und 15 mg Ozon/Liter erzielt wird, vorzugsweise zwischen 2 und 10 mg Ozon/Liter.

3. Verfahren zur Verbesserung der Zuchtbedingungen nach Anspruch 1 oder 2, **dadurch gekennzeichnet, dass** das zurückgeführte Wasser, das ozonisiert ist, durch Einleiten eines Gases ozonisiert wird, das Ozon enthält, so dass im zurückgeführten Wasser ein Ozongehalt zwischen 0,05 und 2 mg Ozon/Liter und vorzugsweise zwischen 0,1 und 0,5 mg Ozon/Liter Wasser erzielt wird.

4. Verfahren zur Verbesserung der Zuchtbedingungen nach einem der vorhergehenden Ansprüche, **dadurch gekennzeichnet, dass** der Rückführverlauf eine Klärbehandlung umfasst, die ein biologisches Filter (4) verwendet, und das Einleiten des ozonisierten Gases stromaufwärts (21) von diesem biologischen Filter vorgenommen wird.

5. Verfahren zur Verbesserung der Zuchtbedingungen nach einem der Ansprüche 1 bis 3, **dadurch gekennzeichnet, dass** der Rückführverlauf eine Klärbehandlung umfasst, die ein biologisches Filter (4) verwendet, und dass das Einleiten des ozonisierten Gases stromabwärts (22) von diesem biologischen Filter vorgenommen wird, bevor das zurückgeführte Wasser mit dem Frischwasserzusatz vermischt wird.

6. Verfahren zur Verbesserung der Zuchtbedingungen nach einem der vorhergehenden Ansprüche, **dadurch gekennzeichnet, dass** das Mischen des zurückgeführten Wassers mit dem Frischwasserzusatz auf der Ebene eines Rückhaltebeckens (6b) erfolgt.

7. Verfahren zur Verbesserung der Zuchtbedingungen nach einem der vorhergehenden Ansprüche, **dadurch gekennzeichnet, dass** die derart verbesserte Fischzucht eine Seefischzucht im geschlossenen Kreislauf ist.

8. Fischzuchtanlage im geschlossenem Kreislauf, wobei die Zucht Mittel zum Zurückführen mindestens eines Teils des Wassers mindestens eines Zuchtbeckens und Mittel zum Klären des zurückgeführten Wassers vor seiner Wiederverwendung im betreffenden Becken umfasst, sowie Mittel zum Zusetzen von Frischwasser zum zurückgeführten Wasserstrom, **dadurch gekennzeichnet, dass** sie Mittel zum Ozonisieren eines Teils oder des ganzen zurückgeführten Wassers sowie des ganzen oder eines Teils des Frischwassers vor dem Mischen mit dem zurückgeführten Wasser umfasst, wobei die Ozonisierungsmittel einen einzigen Ozonisator (50) umfassen, der einen Hauptstrom (51) ozonisierten Gases gemäß der einen oder anderen der folgenden Konfigurationen liefern kann:
i) die Anlage umfasst eine Abzweiglinie (52) eines bestimmten Anteils des Hauptdurchflusses des vom Ozonisator erzeugten ozonisierten Gases durch eine kalibrierte Öffnung (53), um ihn zu dem zu ozonisierenden zurückgeführten Wasser (22) zu lenken, Mittel (54) zum Messen des zu ozonisierenden Frischwasserdurchflusses sowie Mittel zum Regeln (60) der Leistung des Ozonisators auf der Grundlage des von den Messmitteln gemessenen Frischwasserdurchflusses;
j) die Anlage umfasst eine Abzweigleitung (52) eines bestimmten Anteils des Hauptdurchflusses des vom Ozonisator erzeugten ozonisierten Gases durch eine kalibrierte Öffnung (53), um ihn zu dem zu ozonisierenden Frischwasser (22) zu lenken, Mittel (54) zum Messen des zu ozonisierenden zurückgeführten Wasserdurchflusses sowie Mittel zum Regeln (60) der Leistung des Ozonisators auf der Grundlage des von den Messmitteln gemessenen zurückgeführten Wasserdurchflusses.

9. Anlage nach Anspruch 8, **dadurch gekennzeichnet, dass** die derart behandelte Fischzucht eine Seefischzucht im geschlossenen Kreislauf ist.

## Claims

1. Method for improving conditions in closed circuit fish farming, in which:
a) at least part of the water of at least one rearing pond (1) is recycled, recycled water which undergoes one or more purification treatments (3, 4, 5), before being reinjected into the pond in question;
b) in the recycling path of step a), the recycled water is mixed with new water makeup (10);
c) ozonation of all or part of the recycled water (21, 22) and of all or part of the new water makeup (20) is carried out before mixing it with the recycled water, a single ozonator (50) being available for this purpose, operating according to either of the following procedures:
i) the said ozonator produces a main flow (51) of ozonated gas, and a predetermined portion (52) of the main flow of ozonated gas is diverted through a calibrated orifice (53), in order to direct it towards the recirculated water to be ozonated, the power of the said ozonator being adjusted on the basis of the flow rate of new water to be ozonated;
j) the said ozonator produces a main flow (51) of ozonated gas, and a predetermined portion (52) of the main flow of ozonated gas is diverted through a calibrated orifice (53), in order to direct it towards the new water to be ozonated, the power of the said ozonator being adjusted on the basis of the flow rate of recirculated water to be ozonated.

2. Method for improving farming conditions according to Claim 1, **characterized in that** the new water is ozonated by injecting a gas comprising ozone, so as to obtain an ozone content in the water of between 1 and 15 mg ozone/litre, and more preferably, between 2 and 10 mg ozone/litre of water.

3. Method for improving farming conditions according to Claim 1 or 2, **characterized in that** the recirculated water which is ozonated is ozonated by injecting a gas comprising ozone, so as to obtain an ozone content in the recirculated water of between 0.05 and 2 mg ozone/litre, and more preferably between 0.1 and 0.5 mg ozone/litre of water.

4. Method for improving farming conditions according to one of the preceding claims, **characterized in that** the recycling path comprises a purification treatment using a biological filter (4), and the ozonated gas is then injected upstream (21) of this biological filter.

5. Method for improving farming conditions according to one of Claims 1 to 3, **characterized in that** the recycling path comprises a purification treatment using a biological filter (4), and the ozonated gas is then injected downstream (22) of this biological filter, before the recirculated water is mixed with the new water makeup.

6. Method for improving farming conditions according to one of the preceding claims, **characterized in that** the recycled water and the new water makeup is mixed in the retention tank (6b).

7. Method for improving farming conditions according to one of the preceding claims, **characterized in that** the fish farming improved in this way is closed circuit farming of seawater fish.

8. Plant for a closed circuit fish farm, a farm which comprises means of recycling at least part of the water of at least one rearing pond, and means of purifying the recirculated water before its reuse in the pond in question, together with new water makeup means in the stream of recycled water, **characterized in that** it comprises means of ozonating all or part of the recirculated water and all or part of the new water makeup before it is mixed with the recirculated water, which ozonation means comprise a single ozonator (50) capable of supplying a main flow (51) of ozonated gas, according to either of the following configurations:
i) the plant comprises a line (52) for diverting a predetermined portion of the main flow of ozonated gas produced by the ozonator, through a calibrated orifice (53), in order to direct it towards the recirculated water to be ozonated (22), means (54) for measuring the flow rate of new water to be ozonated, and means (60) for adjusting the power of the said ozonator on the basis of the flow rate of new water measured by the said measuring means;
j) the plant comprises a line (52) for diverting a predetermined portion of the main flow of ozonated gas produced by the ozonator, through a calibrated orifice (53), in order to direct it towards the new water to be ozonated (22), means (54) for measuring the flow rate of recirculated water to be ozonated, and means (60) for adjusting the power of the said ozonator on the basis of the flow rate of recirculated water measured by the said measuring means.

9. Plant according to Claim 8, **characterized in that** the fish farm treated in this way is a closed circuit farm for seawater fish.
